Europäisches Patentamt

European Patent Office

Office européen des brevets

(11) Veröffentlichungsnummer: **0 389 647**

**A1**

(12) **EUROPÄISCHE PATENTANMELDUNG**

(21) Anmeldenummer: **89105223.5**

(22) Anmeldetag: **23.03.89**

(51) Int. Cl.⁵: **F16D 3/62, F16D 3/04**

(43) Veröffentlichungstag der Anmeldung:
**03.10.90 Patentblatt 90/40**

(84) Benannte Vertragsstaaten:
**ES FR GB IT**

(71) Anmelder: **Chivari, Ilie**
**1, Rue de Beaumont**
**F-59300 Valenciennes(FR)**

(72) Erfinder: **Chivari, Ilie**
**1, Rue de Beaumont**
**F-59300 Valenciennes(FR)**

(74) Vertreter: **Weisse, Jürgen, Dipl.-Phys. et al**
**Bökenbusch 41 Postfach 11 03 86**
**D-5620 Velbert 11-Langenberg(DE)**

(54) **Wellenkupplung.**

(57) Eine Wellenkupplung zum Kuppeln zweier umlaufender Teile, die einen Radialversatz der Umlaufachsen zuläßt. Zwischen einer antriebseitigen und
einer abtriebseitigen Kupplungshälfte (10,28) sind
ein erstes, zweites und drittes Kupplungszwischenglied (34,36,38) angeordnet. Jedes Kupplungszwischenglied ist durch einen Lenker mit der antriebseitigen Kupplungshälfte (10) und durch einen anderen
Lenker mit der abtriebseitigen Kupplungshälfte (28)
verbunden. Das zweite und das dritte Kupplungszwischenglied (36,38) sind auf einem Zylinderkörper
(40) des ersten Kupplungszwischengliedes (36) gelagert. Der Zylinderkörper (40) weist einen mittleren
Bund (42) auf. Beiderseits des Bundes (42) sind
Ringe (60,66 und 62,68) gelagert, von denen jeweils
ein Ring (60,66) auf der einen Seite des Bundes (42)
und jeweils ein Ring (62,68) auf der anderen Seite
des Bundes (42) Teil des zweiten bzw. des dritten
Kupplungszwischengliedes (36,38) bildet. Die im Abstand voneinander auf dem ersten Kupplungszwischenglied (34) gelagerten Ringe (60 und 62 bzw. 66
und 68) sind im Bereich radialer Arme miteinander
durch Brücken verbunden. An den radialen Armen
sind die Lenker angelenkt. Die Lenker des ersten
Kupplungszwischengliedes sitzen an dem Bund (42).

Fig. 1

## Technisches Gebiet

Die Erfindung betrifft eine Wellenkupplung zum Kuppeln zweier umlaufender Teile, die einen Radialversatz der Umlaufachsen der beiden Teile zuläßt, enthaltend:

(a) eine erste Kupplungshälfte, die mit einem antriebseitigen Teil umläuft,

(b) eine zweite Kupplungshälfte, die mit einem abtriebseitigen Teil umläuft,

(c) ein erstes Kupplungszwischenglied, das
- zylindrische Lagermittel bildet und
- das über eine ersten Lenker mit der antriebseitigen Kupplungshälfte und über einen dem ersten Lenker diametral gegenüberliegenden zweiten Lenker mit der abtriebseitigen Kupplungshälfte verbunden ist,

(d) ein zweites Kupplungszwischenglied,
- das auf den zylindrischen Lagermitteln des ersten Kupplungszwischengliedes drehbar gelagert ist,
- aus zwei in axialem Abstand voneinander angeordneten, miteinander verbundenen Ringen besteht und
- über einen dritten Lenker mit der antriebseitigen Kupplungshälfte und über einen dem dritten Lenker diametral gegenüberliegenden vierten Lenker mit der abtriebseitigen Kupplungshälfte verbunden ist, und

(e) ein drittes Kupplungszwischenglied,
- das ebenfalls auf den zylindrischen Lagermitteln des ersten Kupplungszwischengliedes drehbar gelagert ist und
- über einen fünften Lenker mit der antriebseitigen Kupplungshälfte und über einen dem fünften Lenker diametral gegenüberliegenden sechsten Lenker mit der abtriebseitigen Kupplungshälfte verbunden ist.

## Zugrundeliegender Stand der Technik

Die DE-PS 24 31 383 und die US-PS 4 040 270 beschreiben eine Wellenkupplung zum Kuppeln achsversetzter Wellen. Die Wellenkupplung enthält eine antriebseitige Kupplungshälfte, eine abtriebseitige Kupplungshälfte und drei Kupplungszwischenglieder in Form von drei konzentrisch aufeinander gelagerten Ringen. An jedem der drei Ringe sitzen zwei diametral gegenüberliegende radiale Arme. An den Armen sind Lenker angelenkt. Dabei ist jedes Kupplungszwischenstück über einen Lenker mit der antriebseitigen Kupplungshälfte und über einen diametral gegenüberliegenden anderen Lenker mit der abtriebseitigen Kupplungshälfte verbunden. Die Lenker sind in gleichen Abständen von der gemeinsamen Achse der drei Ringe angelenkt. Bei fluchtenden Wellen sind die Arme der verschiedenen Ringe jeweils um 60° gegeneinander winkelversetzt angeordnet.

Diese bekannte Wellenkupplung gestattet einen radialen Achsversatz der zu kuppelnden Wellen bei winkeltreuer Übertragung der Drehbewegung. Der radiale Achsversatz der Wellen wird durch eine Schwenkbewegung der Lenker ausgeglichen, wobei sich die Ringe gegeneinander verdrehen.

Durch die drei konzentrischen Ringe werden die radialen Abmessungen der Wellenkupplung relativ groß.

Die DE-OS 25 03 586 und die DE-OS 24 51 966 offenbaren eine Wellenkupplung, bei welcher ein zweites und ein drittes Kupplungszwischenglied gleichachsig nebeneinander auf einer zylindrischen Lagerfläche eines ersten Kupplungszwischengliedes gelagert sind. Dabei besteht das zweite Kupplungszwischenglied aus zwei im Abstand voneinander auf dem ersten Kupplungszwischenglied gelagerten Ringen, die radiale Arme zur Lagerung der Lenker tragen und im Bereich der Arme miteinander verbunden sind, so daß sie eine starr verbundene Struktur bilden. Das dritte Kupplungszwischenglied ist ein einzelner Ring in der Mitte zwischen den beiden Ringen des zweiten Kupplungszwischengliedes.

Eine ähnliche KOnstruktion zeigt die DE-OS 34 29 043.

Bei diesen bekannten Wellenkupplungen ist das dritte, mittlere Kupplungszwischenglied nur auf einer relativ schmalen Lagerfläche gelagert. Das Lager ist daher einer starken beanspruchung unterworfen, wenn Kippmomente wirksam werden, welche das dritte Kupplungszwischenglied gegen das erste Kupplungszwischenglied zu verkanten suchen. Die DE-OS 24 51 966 sieht daher als Gleitlager ausgebildete Axiallager zwischen den Ringen des zweiten und des dritten Kupplungszwischengliedes vor.

Bei verschiedenen Kupplungen nach der DE-PS 24 31 383 sind die Lenker über allseitig bewegliche Gelenke wie Kugel- oder Gummigelenke angelenkt. Eine solche Anlenkung gestattet bei winkeltreuer Übertragung der Drehbewegung auch einen Winkelversatz oder einen Axialversatz der zu kuppelnden Teile.

## Offenbarung der Erfindung

Der Erfindung liegt die Aufgabe zugrunde, bei einer Wellenkupplung der eingangs definierten Art, bei welcher ein zweites und ein drittes Kupplungszwischenglied axial nebeneinander auf einem ersten Kupplungszwischenglied gelagert sind, die Geometrie der Lagerung zu verbessern.

Erfindungsgemäß wird diese Aufgabe dadurch gelöst, daß

(f) auf den Lagermitteln des ersten Kupplungszwischengliedes in axialer Folge ein erster, ein zweiter, ein dritter und ein vierter Ring drehbar gelagert sind,

(g) das zweite Kupplungszwischenglied den ersten und den dritten dieser Ringe enthält und

(h) das dritte Kupplungszwischenglied ebenfalls zwei Ringe, und zwar den zweiten und den vierten der besagten Ringe, enthält.

Es sind auf diese Weise alle drei Kupplungszwischenglieder auf einer relativ langen axialen Strecke aufeinander abgestützt, so daß die an den Lagern bei Auftreten von Kippmomenten wirksam werdenden Kräfte vermindert werden.

Ausgestaltungen der Erfindung sind Gegenstand der Unteransprüche.

Drei Ausführungsbeispiele der Erfindung sind nachstehend unter Bezugnahme auf die zugehörigen Zeichnungen näher erläutert.

## Kurze Beschreibung der Zeichnungen

Fig. 1 zeigt einen Achsschnitt einer Wellenkupplung längs der Linie E - F von Fig.2.

Fig.2 zeigt eine Ansicht der Kupplungszwischenglieder längs der Linie C - D von Fig.1.

Fig.3 zeigt einen Längsschnitt der Kupplungszwischenglieder, teilweise abgebrochen, bei einer anderen Ausführung der Wellenkupplung, welche eine durchgehende Welle aufnehmen kann.

Fig.4 zeigt einen Querschnitt durch die Kupplungszwischenglieder längs der Linie G - H von Fig.5 bei einer dritten Ausführung der Kupplung, bei welcher die Lenker und die Lenkerlagerung an den Kupplungszwischenglieder durch angeformte, flexible, u-förmige Arme ersetzt sind.

Fig.5 zeigt einen Schnitt längs der Linie J - K von Fig.4.

## Bevorzugte Ausführungen der Erfindung

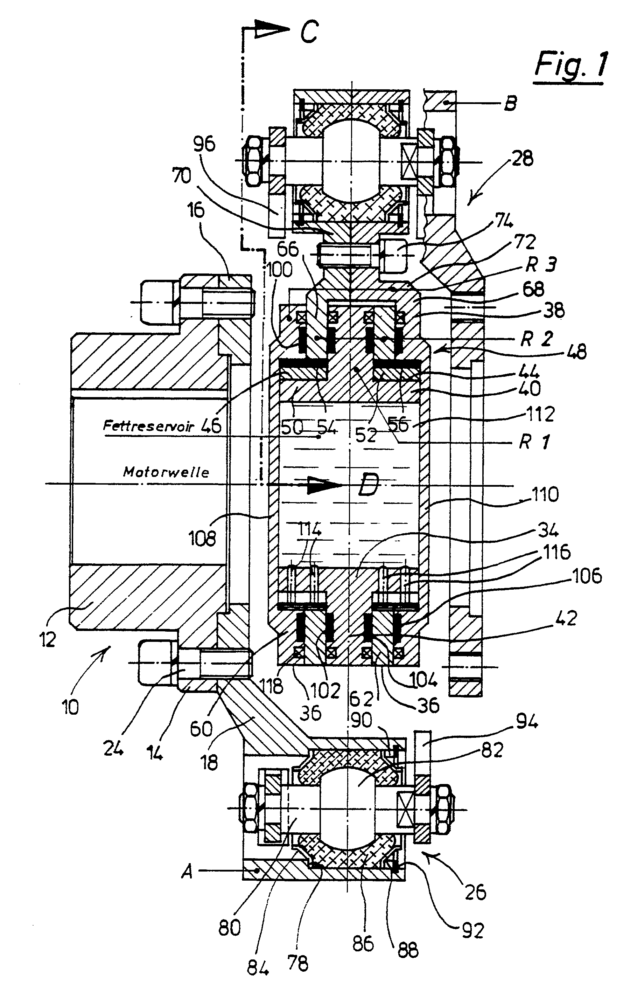

Eine antriebseitige, erste Kupplungshälfte 10 enthält eine Nabe 12, die undrehbar auf eine treibende Welle aufsetzbar ist. Die Nabe 10 weist einen Flansch 14 auf. An dem Flansch 14 ist ein Ring 16 mit drei um 120° gegeneinander winkelversetzten radialen Armen 18, 20, 22 durch Schrauben 24 befestigt. Von den Armen ist in dem Schnitt von Fig. 1 nur der Arm 18 sichtbar. Die Arme 18,20,22 tragen an ihren Enden Gummigelenke 26, die noch im einzelnen beschrieben werden.

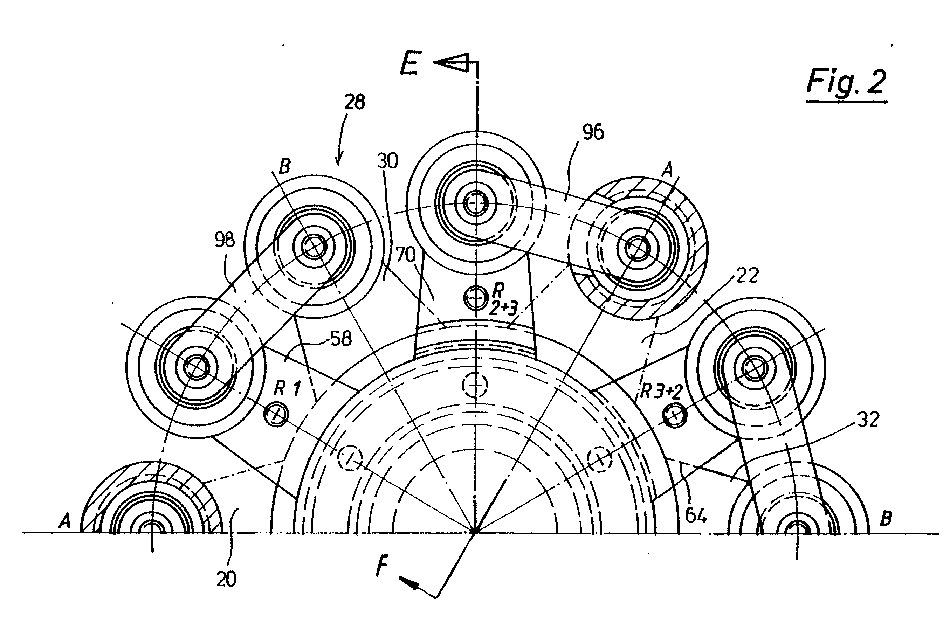

Auf der Abtriebseite ist eine zweite Kupplungshälfte 28 angeordnet, die ähnlich aufgebaut ist wie die erste Kupplungshälfte 10 und von der in Fig.1 nur ein Ring 29 ähnlich dem Ring 16 der Kupplungshälfte 10 dargestellt ist. In Fig.2 sind von der zweiten Kupplungshälfte-28 zwei Arme 30 und 32 entsprechend den Armen 20 und 22 der ersten Kupplungshälfte zu sehen. Der Ring 29 kann auch unmittelbar z.B. an ein Schwungrad angeschraubt werden.

Zwischen den beiden Kupplungshälften 10 und 28 sind drei Kupplungszwischenglieder, nämlich ein erstes Kupplungszwischenglied 34, ein zweites Kupplungszwischenglied 36 und ein drittes Kupplungszwischenglied 38 angeordnet.

Das erste Kupplungszwischenglied 34 enthält einen Zylinderkörper 40, der in der Mitte einen angeformten, radial nach außen vorstehenden Bund oder Ring 42 aufweist. Beiderseits des Bundes 42 sind zwei Ringschultern 44 und 46 gebildet. Auf den Ringschultern 44 und 46 sitzen Lagermittel 48 in Form von zwei Gleitlagern 50 und 52 mit Lagerwerkstoff 54 bzw.56. An dem Bund 42 sitzen zwei diametral einander gegenüberliegende Arme, die in Fig. 1 nicht sichtbar sind und von denen in Fig. 2 nur der eine Arm 58 sichtbar ist.

Das zweite Kupplungszwischenglied 36 enthält zwei Ringe 60 und 62. Der Ring 60 sitzt ganz am Ende (links in Fig. 1) auf dem Gleitlager 50 und zwar im Abstand von dem Bund 42. Der Ring 62 sitzt auf dem Gleitlager 52 auf der anderen Seite des Bundes 42 des ersten Kupplungszwischengliedes 34 angrenzend an den Bund 42. An dem zweiten Kupplungszwischenglied 36 sind ebenfalls zwei diametral einander gegenüberliegende Arme vorgesehen, die in Fig.1 nicht sichtbar sind und von denen in Fig.2 nur der eine Arm 64 sichtbar ist. Im Bereich dieser Arme sind die beiden Ringe 60 und 62 des zweiten Kupplungszwischengliedes 36 miteinander verbunden, so daß sie eine zusammenhängende starre Struktur bilden. Die Konstruktion ist ähnlich, wie sie nachstehend in bezug auf das dritte Kupplungszwischenglied 38 beschrieben ist.

Das dritte Kupplungszwischenglied 38 enthält zwei Ringe 66 und 68. Der Ring 66 sitzt auf dem Gleitlager 50 angrenzend an den Bund 42 des ersten Kupplungszwischengliedes 34. Der Ring 68 sitzt ganz am Ende (rechts in Fig.1) auf dem Gleitlager 52 auf der anderen Seite des Bundes 42 des Kupplungszwischengliedes 34. Wie aus Fig. 1 erkennbar ist, sind die beiden Ringe 66 und 68 im Bereich eines radialen Armes 70 des dritten Kupplungszwischengliedes 38 durch eine Brücke 72 miteinander verbunden. Das dritte Kupplungszwischenglied 38 weist ebenfalls zwei diametral einander gegenüberliegende Arme auf, nämlich den Arm 70 und einen im Schnitt von Fig.1 und auch in Fig.2 nicht sichtbaren zweiten Arm. Die Arme 70 und Brücken 72 sind, wie aus Fig.1 ersichtlich ist, aus Montagegründen zweiteilig und bestehen aus aneinandergesetzten Teilen, die an die Ringe 66 und 68 angeformt sind und durch Schrauben 74 zusammengehalten werden.

Das Kupplungszwischenglied 36 ist, wie gesagt, in ähnlicher WEise aufgebaut.

Die Arme der ersten und der zweiten Kupplungshälften 10 bzw. 28, also in Fig.2 die Arme 20 und 22 und die Arme 30 und 32 sind winkelmäßig auf Lücke zueinander und somit um jeweils 60° gegeneinander winkelversetzt angeordnet. Arme 58, 70 und 64 der ersten, dritten und zweiten Kupplungszwischenglieder 34, 38 bzw. 36 sind zwischen den Armen der Kupplungshälften angeordnet, so daß in jeweils 30° Winkelabstand abwechselnd ein Arm einer Kupplungshälfte und ein Arm eines Kupplungszwischengliedes vorgesehen sind, die Kupplungshälften sich dabei abwechseln und die Kupplungszwischenglieder nacheinander auftreten.

An den Enden der Arme sitzen Gummigelenke, von denen hier nur das Gummigelenk 26 im einzelnen beschrieben wird.

Das Gummigelenk 26 weist eine äußere Hülse 76 auf, die auf ihrer Innenfläche eine Ringschulter 78 bildet. Die Hülse 76 stellt einen äußeren Teil des Gummigelenks 26 dar. Ein innerer Teil des Gummigelenks 26 enthält einen Zapfen 80, der in der Mitte eine kugelige Wulst 82 besitzt. An der Ringschulter 78 liegt ein konisch verformter Blechring 84 an. Ein Gummikörper 86 sitzt zwischen der Hülse 76 und dem Zapfen 80 mit der Wulst 82. Der Gummikörper wird auf der in Fig.1 rechten Seite durch einen konisch verformten Blechring 88 unter Vorspannung gehalten. Der Blechring 88 ist durch einen Ring 90 und einen Sprengring 92 gesichert, Mit dem Zapfen 80 ist ein Lenker 94 fest verbunden. Der Lenker 94 kann durch Torsion des Gummikörpers 86 eine Schwenkbewegung um die Achse des Zapfens 80 ausführen. Durch Verformung des Gummikörpers 86 ist aber auch eine verschwenkung des Lenkers in der Ebene von Fig.1 möglich, so daß die Wellenkupplung auch einen Winkel- und Axialversatz der Umlaufachsen ausgleichen kann. Die übrigen Gummigelenke sind in entsprechender Weise ausgebildet. Alle Lenker sind mittels solcher Gummigelenke einerseits mit einem Kupplungszwischenglied und andererseits mit einer der Kupplungshälften verbunden.

Von den beiden an jedem der Kupplungszwischenglieder 34,36,38 auf diametral gegenüberliegenden Seiten angelenkten Lenkern ist nach dem Prinzip der zum Stand der Technik erwähnten US-PS 4 040 270 jeweils ein Lenker mit der antriebseitigen Kupplungshälfte 10 und der andere Lenker mit der abtriebseitigen Kupplungshälfte 28 verbunden. In Fig.2 ist beispielsweise der mit dem Arm 70 des dritten Kupplungszwischengliedes 38 verbundene Lenker 96 mit dem Arm 22 der antriebseitigen Kupplungshälfte 10 verbunden. Der an dem anderen, um 180° winkelversetzten Arm des dritten Kupplungszwischengliedes, der in den Figuren nicht sichtbar ist, ist mit einem Arm der zweiten Kupplungshälfte 28 über ein Gummigelenk gelenkig verbunden. Der Arm 58 des ersten Kupplungszwischengliedes 34 ist über einen Lenker 98 mit einem Arm 30 der abtriebseitigen Kupplungshälfte 28 verbunden.

Zwischen dem Ring 60 des zweiten Kupplungszwischengliedes 36 und dem Ring 66 des dritten Kupplungszwischengliedes 38 ist ein als Gleitlager ausgebildetes Axiallager 100 angeordnet. Zwischen dem Ring 66 des dritten Kupplungszwischengliedes 38 und dem Bund 42 des ersten Kupplungszwischengliedes 34 ist ein als Gleitlager ausgebildetes Axiallager 102 angeordnet. Zwischen dem Bund 42 des ersten Kupplungszwischengliedes 34 und dem Ring 62 des zweiten Kupplungszwischengliedes 36 ist ein als Gleitlager ausgebildetes Axiallager 104 angeordnet. Zwischen dem Ring 62 des zweiten Kupplungszwischengliedes 36 und dem Ring 68 des dritten Kupplungszwischengliedes ist ein als Gleitlager ausgebildetes Axiallager 106 angeordnet. Der Zylinderkörper 40 ist ein an beiden Enden offener Hohlzylinder. An den Ringen 60 und 68 sind auf der Außenseite Deckelplatten 108 bzw. 110 angeformt. Diese Deckelplatten 108,110 schließen den Hohlzylinder an den Enden ab. Auf diese weise wird ein abgeschlossenes Schmierstoffreservoir 112 innerhalb des Zylinderkörpers 40 gebildet. Dieses Schmierstoffreservoir 112 ist über Schmierstoffkanäle 114 bzw. 116 mit den Gleitlagern 50 und 56 verbunden. Durch die Zentrifugalkraft wird Schmierstoff aus dem Schmierstoffreservoir 112 in den Lagerwerkstoff 54,56 der Gleitlager 50,52 gefördert. Der Schmierstoff wandert auch zwischen den Ringen 60,66 usw. in die Axiallager 100,102, 104 und 106. Durch Dichtungen 118 wird der Schmierstoff dann zwischen den Ringen gehalten. Es werden auf diese Weise die Gleitlager 50,52 und die Axiallager 100-bis 106 ständig aus dem Schmierstoffreservoir 112 geschmiert. Als Schmierstoff kann Fett verwendet werden.

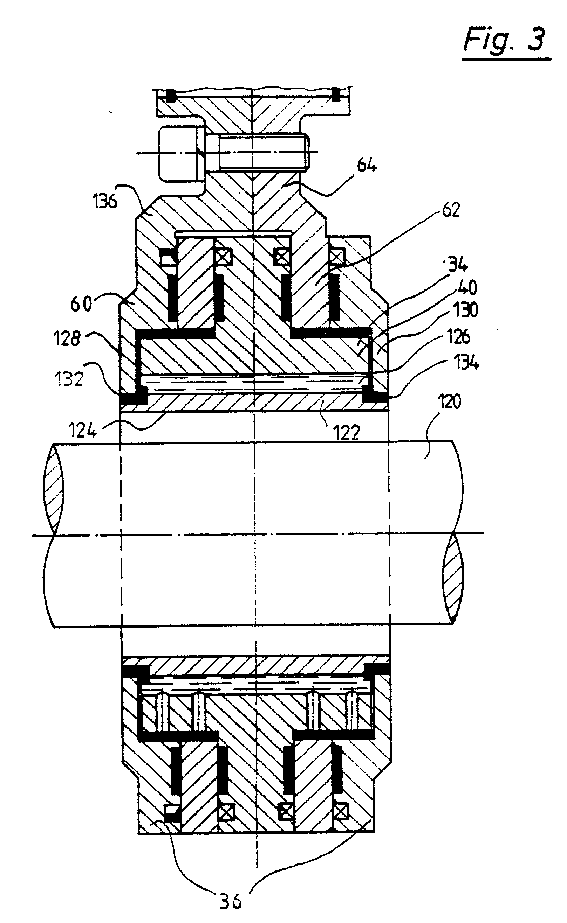

Die Ausführung nach Fig.3 ist ähnlich aufgebaut wie die Ausführung nach Fig.1 und 2. Entsprechende Teile sind mit den gleichen Bezugszeichen versehen wie dort.

Die Wellenkupplung von Fig.3 ist zur Aufnahme einer durchgehenden Welle 120 eingerichtet. Dementsprechend ist der Zylinderkörper 40 des ersten Kupplungszwischengliedes 34 ein an beiden Enden offener Hohlzylinder. Innerhalb dieses Hohlzylinders sitzt eine Hülse 122, durch deren Bohrung 124 die Welle 120 hindurchgeführt ist. Das Schmierstoffreservoir ist ein Ringraum 126, der zwischen dem Zylinderkörper 40, der Hülse 122 und Seitenwangen 128, 130 der Ringe 60 und 68 gebildet ist. Dichtungen 132 und 134 sitzen zwischen den Seitenwangen 128, 130 und der Hülse 122.

In Fig.3 ist auch die Brücke 136 erkennbar, welche bei dem zweiten Kupplungszwischenglied 36 im Bereich des Armes 64 die Ringe 60 und 62 verbindet.

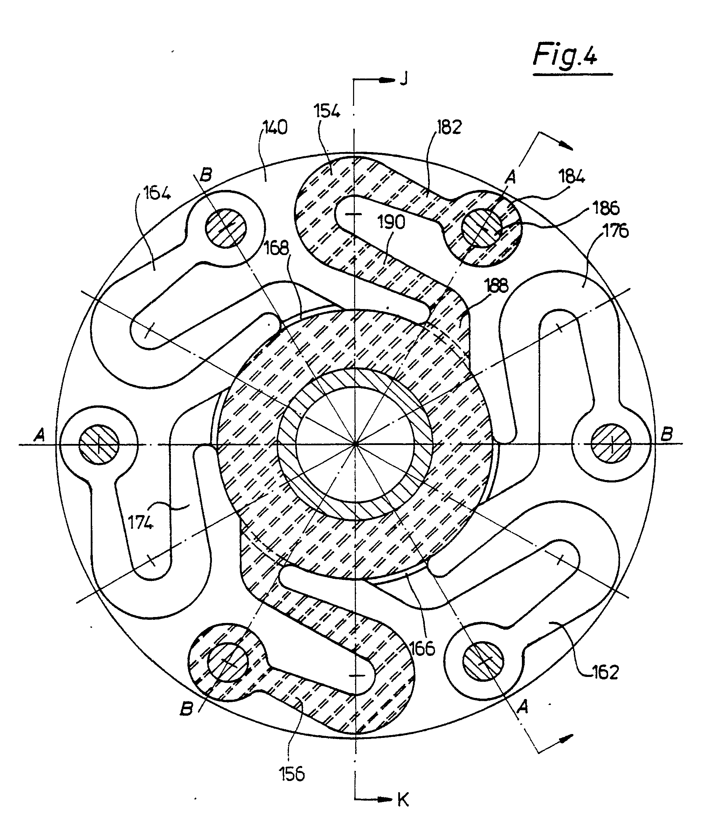

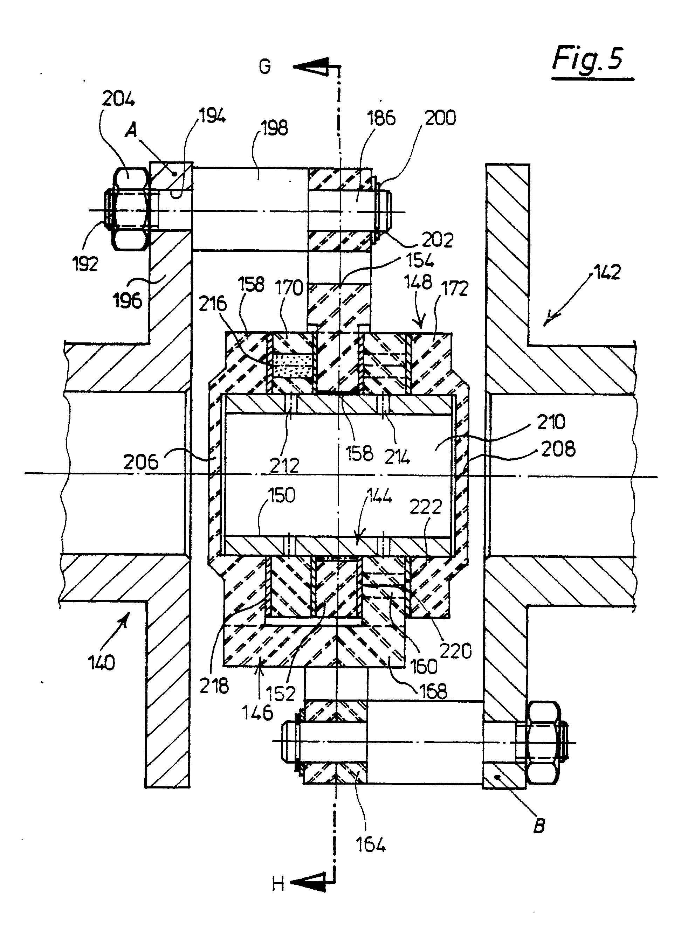

Fig.4 und 5 zeigen eine Wellenkupplung, bei welcher die Lenker und die Gelenke ersetzt sind durch flexible, u-förmige Arme, welche an die Ringe angeformt sind. Die Wellenkupplung kann dadurch sehr einfach und preisgünstig aus relativ wenigen Teilen hergestellt werden.

In Fig.4 und 5 ist mit 140 eine antriebseitige Kupplungshälfte und mit 142 eine abtriebseitige Kupplungshälfte bezeichnet. Zwischen den beiden Kupplungshälften 140 und 142 sind drei Kupplungszwischenglieder 144,146 und 148 angeordnet. Das erste Kupplungszwischenglied 144 besteht aus einem als Hohlzylinder ausgebildeten Zylinderkörper 150, auf welchem in der Mitte ein Bund oder Ring 152 sitzt, welcher auf diametral gegenüberliegenden Seiten Arme 154 und 156 trägt. Der Bund 152 mit den Armen ist als ein von dem Zylinderkörper 150 getrennter Bauteil ausgebildet, der, wie bei 158 angedeutet, undrehbar mit dem Zylinderkörper verbunden ist. Es ist dadurch möglich, den Zylinderkörper 150 aus einem anderen Material herzustellen als den Bund 152 und die Arme 154,156. Der Bund 152 mit den Armen 154,156 kann daher als Kunststoffteil hergestellt werden, während der Zylinderkörper 150, der als Lagermittel für die anderen Kupplungszwischenglieder 146 und 148 dient, aus Stahl hergestellt werden kann. Es ist natürlich auch möglich, den Bund 152 mit den Armen 154 und 156 aus federnd elastischem Metall, beispielsweise aus Federstahl herzustellen.

Das zweite Kupplungszwischenglied 146 enthält zwei Ringe 158 und 160, die auf dem Zylinderkörper 150 drehbar gelagert sind. Der Ring 158 ist dabei auf der einen Seite des Bundes 152 ganz am Ende des Zylinderkörpers 152 gelagert (links in Fig.5). Der Ring 160 ist auf der anderen Seite des Bundes 152 und angrenzend an den Bund 152 auf dem Zylinderkörper 150 gelagert. Die beiden Ringe 158 und 160 sind im Bereich der an dem zweiten Kupplungszwischenglied 146 vorgesehenen Arme 162,164 durch Brücken 166 bzw. 168 miteinander verbunden, von denen in Fig.5 eine im Schnitt dargestellt ist.

Das dritte Kupplungszwischenglied 148 enthält zwei Ringe 170 und 172, die ebenfalls auf dem Zylinderkörper 152 drehbar gelagert sind. Der Ring 170 ist auf der einen Seite des Bundes 152 (links in Fig.5) an den Bund 152 angrenzend auf dem Zylinderkörper 150 gelagert. Der Ring 172 ist auf der ansderen Seite des Bundes ganz am Ende des Zylinderkörpers 150 gelagert. An dem dritten Kupplungszwischenglied 146 sind auf diametral gegenüberliegenden Seiten Arme 174 und 176 vorgesehen. Im Bereich dieser Arme 174 und 176 sind die Ringe 170 und 172 durch Brücken 178 bzw. 180, ähnlich der Brücke 168, miteinander verbunden.

Die Arme 154,156;164,166;174,176 sind übereinstimmend ausgebildet, und es wird daher nur der Arm 154 im einzelnen beschrieben. Die Arme verlaufen von den Ringen bzw. dem Bund 152 zunächst ein Stück radial auswärts und sind dann u-förmig gebogen. An den Enden des äußeren Schenkels 182 sind Augen 184 zur Aufnahme eines an der Kupplungshälfte 140 (oder 142) vorgesehenen Zapfens 186. Angrenzend an das radiale Stück 188 und an das Auge 184 weisen die beiden Schenkel 190 bzw 182 Abschnitte verminderten Querschnitts auf, welche als Biegezonen wirken. Eine solche Anordnung wirkt funktionell wie ein Lenker, der schwenkbar an dem Kupplungszwischenglied und an der Kupplungshälfte angelenkt ist.

Wie aus Fig.5 ersichtlich ist, ist der Zapfen 186 von einem Ende eines Gewindebolzens 192 gebildet. Der Gewindebolzen 192 erstreckt sich durch eine Bohrung 194 eines Flansches 196 der antriebseitigen Kupplungshälfte 140 und durch eine Abstandshülse 198. Die Abstandshülse 198 sitzt zwischen dem Flansch 196 und dem Arm 154. Eine Ringscheibe 200, die auf dem Gewindebolzen 192 sitzt und durch einen Sprengring 202 gesichert ist, liegt auf der Stirnfläche des Auges 184 auf. Durch eine Mutter 204, die auf den Gewindebolzen 192 aufgeschraubt ist, wird die Ringscheibe 200 gegen das Auge 184, das Auge 184 gegen die Abstandshülse 198 und die Abstandshülse 198 gegen den Flansch 196 festgezogen.

Ähnlich wie bei der Ausführung nach Fig. 1 und 2 sind auch hier an die Ringe 158 und 172 auf der Außenseite Deckelplatten 206 bzw. 208 angeformt. Die Deckelplatten 206,208 schließen den hohlzylindrischen, an den Enden offenen Zylinderkörper 150 an den Enden ab. Dadurch wird ein Schmiermittelreservoir 210 gebildet. Das Schmiermittelreservoir 210 ist über Kanäle 212, 214 mit den Lagerflächen verbunden, auf denen das zweite und das dritte Kupplungszwischenglied 146 bzw. 148 auf dem Zylinderkörper 150 gelagert sind. Zwischen dem Ring 158 und dem Ring 170 ist ein Axiallager 216 aus einem Gleitwerkstoff angeordnet. Zwischen dem Ring 170 und dem Bund 152 ist ein Axiallager 218 aus einem Gleitwerkstoff angeordnet. Zwischen dem Bund 152 und dem Ring 160 ist ein Axiallager 220 aus einem Gleitwerkstoff angeordnet. Zwischen dem Ring 160 und dem Ring 172 ist ein Axiallager 222 aus einem Gleitwerkstoff angeordnet.

**Ansprüche**

1. Wellenkupplung zum Kuppeln zweier umlaufender Teile, die einen Radialversatz der Umlaufachsen der beiden Teile zuläßt, enthaltend:

(a) eine erste Kupplungshälfte (10;140), die mit einem antriebseitigen Teil umläuft,

(b) eine zweite Kupplungshälfte (28;142) die mit einem abtriebseitigen Teil umläuft,

(c) ein erstes Kupplungszwischenglied (34;144) das
- zylindrische Lagermittel (50,52; 150) bildet und
- das über einen ersten Lenker mit der antriebseitigen Kupplungshälfte (10;140)und über einen dem ersten Lenker diametral gegenüberliegenden zweiten Lenker mit der abtriebseitigen Kupplungshälfte (28;142) verbunden ist,

(d) ein zweites Kupplungszwischenglied (36;146),
- das auf den zylindrischen Lagermitteln (50,52;150) des ersten Kupplungszwischengliedes (34;144) drehbar gelagert ist,
- aus zwei in axialem Abstand voneinander angeordneten, miteinander verbundenen Ringen besteht und
- über einen dritten Lenker mit der antriebseitigen Kupplungshälfte (10;140) und über einen dem dritten Lenker diametral gegenüberliegenden vierten Lenker mit der abtriebseitigen Kupplungshälfte (28;142) verbunden ist, und

(e) ein drittes Kupplungszwischenglied (38;148),
- das ebenfalls auf den zylindrischen Lagermitteln (50,52;150) des ersten Kupplungszwischengliedes (34;144) drehbar gelagert ist und
- über einen fünften Lenker mit der antriebseitigen Kupplungshälfte (10;140) und über eine sechsten Lenker mit der abtriebseitigen Kuplungshälfte (28;142) verbunden ist,
**dadurch gekennzeichnet, daß**

(f) auf den Lagermitteln (50,52;150) des ersten Kupplungszwischengliedes (34;144) in axialer Folge ein erster, ein zweiter, ein dritter und ein vierter Ring (60,66,62,68;158,170,160,172) drehbar gelagert sind,

(g) das zweite Kupplungszwischenglied (36;146) den ersten und den dritten dieser Ringe (60,62;158 160) enthält und

(h) das dritte Kupplungszwischenglied (38;148) ebenfalls zwei Ringe, und zwar den zweiten und den vierten der besagten Ringe (66,68;170,172) enthält.

2. Wellenkupplung nach Anspruch 1, **dadurch gekennzeichnet, daß**

(a) die Kupplungszwischenglieder (34,36,38;144,146, 148) radiale Arme (58,..,64,..,70,..) aufweisen, an denen die Lenker in gleichen Abständen von der Achse der Lagermittel (50,52;150) angelenkt sind, und

(b) die radialen Arme der Kupplungszwischenglieder (34,36,38;144,146,148) im Ruhezustand bei fluchtenden Achsen jeweils um 60° gegeneinander winkelversetzt sind,

(c) die Ringe (60,62;158,160) des zweiten Kupplungszwischengliedes (36;146) in den Bereichen der Arme des zweiten Kupplungszwischengliedes (36;146) miteinander verbunden sind und

(d) die Ringe (66,68;170,172) des dritten Kupplungszwischengliedes (38;148) in den Bereichen der Arme des dritten Kupplungszwischengliedes miteinander verbunden sind.

3. Wellenkupplung nach Anspruch 2, **dadurch gekennzeichnet, daß**

(a) das erste Kopplungszwischenglied (34,144) einen Zylinderkörper (40,150) enthält, der in der Mitte einen nach außen vorstehenden Bund (42;152) aufweist,

(b) der erste und der zweite Ring (60,66;158,170) des zweiten und des dritten Kupplungszwischengliedes (36,38;146,148) auf einer Seite des Bundes (42,152) auf dem Zylinderkörper (40;150) gelagert sind und

(c) der dritte ind der vierte Ring (62,68;160,172) des zweiten und des dritten Kupplungszwischengliedes (36,38;146,148) auf der anderen Seite des Bundes (42;152) auf dem Zylinderkörper (40,150) gelagert ist.

4. Wellenkupplung nach Anspruch 3, **dadurch gekennzeichnet, daß** Axiallager (100,102,104,106;216,218,220,222) zwischen den Ringen und zwischen dem Bund und den angrenzenden Ringen vorgesehen sind.

5. Wellenkupplung nach Anspruch 4, **dadurch gekennzeichnet, daß**

(a) die Lagermittel von Gleitlagern (50,52) gebildet sind, die beiderseits des Bundes (42)auf der Mantelfläche des Zylinderkörpers (40) angeordnet sind,

(b) der Zylinderkörper (40) als Hohlkörper ausgebildet ist, der ein Schmierstoffreservoir (112) umschließt, und

(c) in dem Zylinderkörper (40) Schmierstoffkanäle (114,116) gebildet sind, welche das Schmierstoffreservoir (112) mit den Gleitlagern (50,52) verbinden.

6. Wellenkupplung nach Anspruch 5, **dadurch gekennzeichnet, daß** der Zylinderkörper (40) von einem an den Enden offenen Hohlzylinder gebildet ist und der erste und der vierte Ring (60,68) auf den Außenseiten jeweils eine angeformte Deckelplatte (108,110) bildet, durch welche der Innenraum des Hohlzylinders abgeschlossen wird.

7. Wellenkupplung nach einem der Ansprüche 1 bis 6, **dadurch gekennzeichnet, daß** die Lenker von jeweils an das Kupplungszwischenglied (144) angeformten, flexiblen, u-förmigen Armen
(154) gebildet sind.

*Fig. 1*

Fettreservoir 46

Motorwelle

Fig. 2

EP 0 389 647 A1

*Fig. 3*

*Fig.4*

*Fig.5*

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-3 519 895 (CHIVARI) * Seite 11, Zeile 10 - Seite 13, Zeile 5; Figuren 1-3 * | 1,2,4,5 | F 16 D 3/62 F 16 D 3/04 |
| E | DE-A-3 732 705 (CHIVARI) * Insgesamt * | 1-7 | |
| D,A | DE-A-3 429 043 (CHIVARI) | | |
| D,A | DE-A-2 503 586 (SIEMENS) | | |
| D,A | DE-A-2 451 966 (SIEMENS) | | |
| D,A | DE-A-2 431 383 (CHIVARI) | | |
| D,A | US-A-4 040 270 (CHIVARI) | | |
| A | DE-A-3 522 487 (SCHMIDT-KUPPLUNG) | | |

RECHERCHIERTE SACHGEBIETE (Int. Cl.5)

F 16 D

Der vorliegende Recherchenbericht wurde für alle Patentansprüche erstellt

| Recherchenort | Abschlußdatum der Recherche | Prüfer |
|---|---|---|
| DEN HAAG | 23-11-1989 | BARON C. |

EPO FORM 1503 03.82 (P0403)